# EUROPÄISCHE PATENTANMELDUNG

(11) **EP 1 657 300 A1**
(43) Veröffentlichungstag der Anmeldung: **17.05.2006**
(21) Anmeldenummer: 04105672.2
(22) Anmeldetag: 10.11.2004
(51) Int. Cl.: C12C 5/00, C12C 12/00, A23L 2/84, A23L 1/015

(54) **Prolamin-reduzierte Getränke und Verfahren zur Herstellung**

(71) Anmelder: N-Zyme BioTec GmbH, 64295 Darmstadt (DE)
(72) Erfinder: Pasternack, Ralf Dr., 64347 Griesheim (DE); Marx, Stefan Dr., 64380 Rossdorf (DE); Jordan, Dominik, 64289 Darmstadt (DE)
(74) Vertreter: von Kreisler Selting Werner

(57) **Zusammenfassung**

Verfahren zur Herstellung eines Getränkes, eines Getränkegrundstoffs, eines Getränkekonzentrates oder eines Getränkezusatzes mit vermindertem Prolamingehalt aus prolaminhaltigen Rohstoffen mit folgenden Schritten:
a) Inkontaktbringen des Getränkes oder einer Vorstufe des Getränks mit quervernetzenden Enzymen, um modifiziertes Prolamin zu erhalten
b) mindestens teilweise Entfernung des modifizierten Prolamins.

## Beschreibung

Die vorliegende Erfindung betrifft Getränke mit vermindertem Prolamingehalt und Verfahren zu ihrer Herstellung.

Prolamine (Gluten, Klebereiweiß) sind eine heterogene Gruppe von Ethanollöslichen Proteinen verschiedener Getreidearten und werden bei Weizen als Gliadine, bei Gerste als Hordeine, bei Roggen als Secaline und bei Hafer als Avenine bezeichnet. Trotz struktureller Unterschiede innerhalb der Primärsequenz werden die Prolamine unabhängig, ob sie von Weizen oder einer anderen Getreideart stammen häufig auch allgemein als Glutene bzw. Gliadine bezeichnet. Eine große Zahl von in der Lebensmittel- und Getränkeindustrie verwendeten Getreidearten enthalten Prolamine in z.T. erheblichen Mengen. Beispielhaft für die Getränkeindustrie genannt sind: alle Typen von Bier und Biermischgetränken, alkoholfreie Getränke auf Malzbasis (z.B. Malzbier), Malz-oder Getreidekaffee. Mit einem Pro-Kopf-Verbrauch von ca. 80 L ist Bier immer noch eines der am meisten konsumierten Getränke in Europa. Alternativ erfreuen sich Biermischgetränke und sog. innovative Getränke mit einem Zusatznutzen innerhalb der jüngeren Generation einer immer größeren Beliebtheit. Aus diesem Grund und wegen seiner ernährungsphysiologisch hochwertigen Inhaltsstoffe werden für auf Getreiderohstoffen basierte Getränke gute Marktchancen prognostiziert. Da all diese Getränke aber immer Prolamine (Gluten) in unterschiedlichen Konzentrationen aufweisen, ist der Konsum dieser Getränke für den Zöliakiepatienten strengstens untersagt.

Zöliakie oder Sprue ist eine chronische Autoimmunkrankheit, die in genetisch prädisponierten Patienten durch bestimmte Getreideeiweiße (Prolamine, Gluten) ausgelöst wird. Bei Zöliakiepatienten kommt es meist schon im 1 oder 2 Lebensjahr zu intestinalen Malabsorptionssyndromen infolge ausgedehnter Läsionen der Dünndarmmukosa, hervorgerufen durch die Einwirkung von Gluten. Die überwiegende Mehrheit der Patienten exprimiert sogenannte HLA-DQ2 und/oder HLA-DQ8-Moleküle. Die aktuelle wissenschaftliche Meinung geht davon aus, dass durch Interaktion von spezifischen Gliadinmolekülen mit HLA-DQ2 / HLA-DQ8-Antigenen die Proliferation von T-Lymphozyten induziert wird. Diese überschießende Immunantwort wird ursächlich in Zusammenhang mit der Degeneration der Dünndarmschleimhaut gebracht. Bei anhaltender Gluteneinwirkung wird die Epithelregeneration unzureichend, es kommt zur Athropie der Darmzotten des Dünndarms und verursacht die verminderte Absorptionsleistung, Wachstumsstillstand, Dystrophie, muskulärer Hypoionie, übel riechenden Stühlen; es besteht sogar die Möglichkeit von malignen Sarkomen. Weitere Symptome sind Depression und Blutarmut.

Da aktuell keine Medikamente, die zu einer Heilung der Sprue/Zöliakie führen, existieren, besteht die einzig mögliche Therapie in einem lebenslangen Verzicht auf glutenhaltige Lebensmittel. Während man in früheren Jahren in den Industrienationen von einer Inzidenzrate von 1:1200 ausgegangen ist, stellt man heute durch umfangreiche Untersuchungen und verbesserte diagnostische Möglichkeiten eine Verbreitung von 1:100 bis 1:200 fest, so dass man davon ausgehen kann, dass Zöliakie die häufigste chronische Darmerkrankung in der westlichen Bevölkerung darstellt.

Die Dermatitis herpetiformis oder Morbus Duhring ist eine stark juckende, papulovesikulöse (Papeln = Knötchen und Vesikel = Bläschen) Dermatose. Patienten mit Morbus Duhring weisen in bis zu 24% der Fälle auch eine Zöliakie auf, obschon typische Symptome letztgenannter Erkrankung häufig fehlen können. In Dünndarmbiopsien haben sogar bis zu 85% der Dermatitis herpetiformis-Kranken zöliakietypische Veränderungen mit variabler Zottenatrophie. Patienten mit Dermatitis herpetiformis Duhring sollten dementsprechend unbedingt auf Zöliakie getestet werden. In solchen Fällen führt die glutenfreie Ernährung langfristig meist zum Verschwinden der Hautläsionen.

Bei der Auswahl und Züchtung von Lebensmittelgetreide wurde seit langem auf einen hohen Eiweiß- und damit auch Klebereiweißgehalt aus zwei Gründen geachtet:
Eiweiß ist gegenüber Stärke und anderen Polysacchariden der ernährungsphysiologisch wertvollere Bestandteil und Klebereiweiß ist entscheidend für gewisse technologische Eigenschaften bei der Getreideverarbeitung. So sind z.B. der Gehalt und die Struktur des Klebers ausschlaggebend für die wesentlichen physico-chemische Eigenschaften wie Elastizität, Gashaltefähigkeit, Klebrigkeit oder Gärstabilität von Teigen.

Deshalb sind in allen wichtigen Getreidearten wie Weizen, Roggen, Gerste, aber auch Dinkel, Grünkern, Einkorn, Emmer, Kamut, Triticale, Bulgur und Hafer Prolamine enthalten, welche daraus hergestellte Lebensmittel und Getränke für den Zöliakiepatienten ungenießbar machen.

Bei der Verwendung von prolaminhaltigen Getreidearten für Getränke ist in den allermeisten Fällen davon auszugehen, dass sich Gliadine auch im Produkt befinden und zwar in Mengen, welche den Konsum durch Zöliakiepatienten verbietet. Sowohl die Verwendung von gliadinfreiem Getreide (Buchweizen, Reis, Hirse, etc.) als auch eine Verfahrensführung während der Getränkeherstellung, welche eine generelle Eiweißabtrennung garantiert, ist aus vielen Gründen meist nicht möglich. Neben der nicht immer gesicherten Verfügbarkeit der Rohwaren, besitzen diese Getränke meist auch veränderte organoleptische Eigenschaften wie Geschmack oder Mundgefühl. Auch physikochemische Eigenschaften wie Schaumbildung und Schaumstabilität entsprechen meist nicht denen von traditionellen Produkten, die vom Konsumenten erwartet werden. Ein weiteres Problem stellt die Kontaminationsgefahr von gliadinfreien Rohwaren/Zwischenprodukten mit gliadinhaltigen Rohwaren/Zwischenprodukten während Produktion, Transport, Lagerung und Verarbeitung dar.

EP 0 949 329 A1 beschreibt ein glutenfreies Bier gebraut aus Buchweizen und hydrolysierter Maisstärke unter Verwendung von amylolytischen Enzymen und Glucanase.

Alternativ zielen aktuelle Forschungsaktivitäten auf die Entwicklung von genetisch veränderten Getreidearten ab, die keine Gliadine mehr produzieren können. Die Entwicklungen sind noch in einem frühen Stadium und es ist momentan nicht abzusehen, ob und wann diese Pflanzen kommerziell angebaut werden, ob die daraus gewonnenen Rohstoffe weiterhin für den Brauprozess eingesetzt werden können und welche Akzeptanz diese genetisch modifizierten Getreidearten beim Verbraucher letztendlich erreichen werden.

Aus diesem Grund enthalten fast alle erhältlichen Getränke auf Basis konventioneller Getreidearten nachweisbare Mengen an Gliadinen, besonders hoch ist deren Gehalt in Bieren, zu deren Herstellung Gerste und Weizen verwendet wird.
Quervernetzende Enzyme sind Enzyme, die innerhalb von Proteinen oder zwischen Proteinen und anderen Substanzen wie z.B. Kohlenhydraten, Phenolenkovalente Bindungen erzeugen können und so die Ausbildung von Proteinaggregaten, gegebenenfalls unter Beteiligung weiterer Substanzen herbeiführen. Typische Vertreter sind Transglutaminasen, Peroxidasen, Hexose-Oxidasen, Tyrosinasen und Laccasen, siehe auch Thalmann CR & Lötzbeyer T 2002: Enzymatic cross-linking of proteins with tyrosinase. Eur. Food Res. Technol. 214: 276-281; US 6,358,543 (Method of improving the properties of a flour dough, a flour dough improving composition and improved food products), Boeriu CG, Oudgenoeg G, Spekking WT, Berendsen LB, Vancon L, Boumans H, Gruppen H, van Berkel WJ, Laane C, Voragen AG 2004 Horseradish peroxidasecatalyzed cross-linking of feruloylated arabinoxylans with beta-casein. J Agric Food Chem. 2004 Oct 20;52(21):6633-9.

Transglutaminasen (Protein-Glutamin: Amin-γ-glutamyltransferase; E.C. 2.3.2.13) katalysieren den Aufbau stabiler Querbrücken zwischen Proteinen. Dabei wird die γ-Carboxyamidfunktion von Glutaminseitenketten unter Freisetzung von Ammoniumionen auf die ε-Aminogruppe von Lysinresten übertragen (Folk and Finlayson, Adv. Protein Chem. 31, 1-133 (1977)).

Die gebildete Isopeptidbindung hält auch einer Hydrolyse durch Proteasen stand und wird physiologisch erst nach vollständigem Abbau der Proteine durch die γ-Glutamylamin-Cyclotransferase und durch die γ-Glutamyltransferase gespalten (Fink et al. Proc. Natl. Acad. Sci. USA 77, 4564-4568 (1980), Seguro et al.; J. Agric. Food Chem. 43; 1977-1981(1995)).

Für technische Anwendungen eignet sich insbesondere die bakterielle Transglutaminase von *Streptomyces mobaraensis.* Die bakterielle Transglutaminase stammt vom nicht-pathogenen und nicht-toxischen *Streptomyces mobaraensis.* Von der "Food and Drug Administration" (FDA) wurde diese TGase-Präparation als "Generally regarded as safe" (GRAS) eingestuft (GRN 000095). Eine kostengünstige Herstellung, das breite Substratspektrum sowie hohe Reaktionsraten prädestinieren das Enzym für industrielle Anwendungen im Nahrungsmittelbereich. Beispielhaft genannt sind: Vernetzung von Fleisch, Fisch, Käse, Milch, Molkeproteinen, Sojaproteinen und Weizenproteinen zur Erreichung einer verbesserten Struktur, einer höheren Viskosität oder eines angenehmen Mundgefühls. Die Kreation neuer Nahrungsprodukte durch den Einsatz von Transglutaminase wurde hierdurch möglich (Yokoyama et al., Appl. Microbiol. Biotechnol. 64, 447-454 (2004)).

WO 02/051873 beschreibt ein Verfahren zur Gewinnung von aufgereinigter Stärke aus proteinhaltigen pflanzlichen Rohstoffen unter Einwirkung von quervernetzenden Agenzien, z.B. Transglutaminase. Nach Quervernetzung der im Rohstoff vorkommenden bzw. zusätzlich zugesetzten Proteine durch Transglutaminase, ist eine erleichterte Abtrennung der Stärke vom Protein-Netzwerk möglich.

EP 1 190 624 A2 beschreibt Verfahren zur Verbesserung der backtechnologischen Qualität von weizenarmen Teigen mittels Transglutaminase. Durch den Enzymeinsatz konnte u.a. eine erhöhte Gashaltefähigkeit, eine geringere Teigklebrigkeit sowie eine verbesserte Gärstabilität erreicht werden.

US 6,106,887 offenbart ein Verfahren zur Herstellung von modifizierten Getreidemehlen unter Verwendung von Transglutaminase während des Anmach- und/oder Mahlverfahrens.

EP 0 760 209 A1 offenbart den Einsatz von Transglutaminase zur Herstellung von Backprodukten mit Mehrschichtstruktur.

WO 01/65948 offenbart unter Einwirkung von Transglutaminase hergestellte Proteinpräparation aus Weizenprotein (Gluten) und Molkenprotein mit verbesserten technologischen Eigenschaften wie Emulgierfähigkeit, Gelierfähigkeit oder Wasserbindevermögen.

Aufgabe der vorliegenden Erfindung war es, die genannten Nachteile und Probleme des Standes der Technik zu überwinden, insbesondere ein Verfahren zur Herstellung prolaminreduzierter Getränke und verwandter Produkte bereitzustellen.

Gelöst wird die Aufgabe durch ein Verfahren zur Herstellung eines Getränkes, eines Getränkegrundstoffs, eines Getränkekonzentrates oder eines Getränkezusatzes mit vermindertem Prolamingehalt aus prolaminhaltigen Rohstoffen mit folgenden Schritten:
a) Inkontaktbringen des Getränkes oder einer Vorstufe des Getränks mit quervernetzenden Enzymen, um modifiziertes Prolamin zu erhalten
b) Zumindest teilweise Entfernung des modifizierten Prolamins.

Als prolaminhaltige Rohstoffe eignen sich insbesondere Weizen, Getreide, wie Roggen, Hafer, Gerste, Dinkel, Grünkorn, Einkorn, Emmer, Tric itale, Bulgur, Kamut oder Mischungen davon.

Als quervernetzende Enzyme eignen sich insbesondere solche aus den Enzymklassen der Transglutaminasen (EC 2.3.2.13), Peroxidasen (EC 1.11.1.7), Hexose-Oxidasen (EC 1.1.3.5), Tyrosinasen (EC 1.14.18.1), Laccasen (EC 1.10.3.2), Proteindisulfidisomerasen (EC 5.3.4.1) und Kombinationen hiervon.

Ein besonders bevorzugtes, quervernetzendes Enzym sind bakterielle Transglutaminasen, insbesondere Ca²⁺-unabhängige Transglutaminasen aus *Streptomyces mobaraensis.*

"Prolamine" im Sinne dieser Anmeldung sind ethanollösliche Protein aus Getreidearten, die auch als Gluten, Klebereiweiß, Gliadine, Hordeine, Secaline oder Avenine bezeichnet werden.

"Getränk" bedeutet ein Lebensmittel, das in flüssiger Form verzehrt werden kann.

"Getränkegrundstoff" oder "Getränkekonzentrat" bedeutet eine Vorstufe zur Herstellung eines Lebensmittels in fester oder flüssiger Form, der nach Weiterverarbeitung als Lebensmittel verzehrt werden kann.

Durch das erfindungsgemäße Verfahren kann der Prolamingehalt in den Getränken, Getränkekonzentraten oder Getränkevorstufen reduziert werden, wobei die physico-chemischen Eigenschaften des Getränkes möglichst wenig verändert werden.

Beispielsweise kann die erfindungsgemäße Behandlung mit Transglutaminase zu Herstellung von Bieren genutzt werden, deren organoleptische und physico-chemischen Eigenschaften denen von konventionellen Bieren entsprechen. Dies gilt insbesondere für Schaumverhalten und Schaumstabilität, Dichte, Farbe, Extraktgehalt, Vergärungsgrad oder Bittereinheiten.

Die einzusetzende Enzymmenge ist abhängig von der Enzympräparation und kann in breiten Grenzen variieren. Sie richtet sich nach dem Prolamingehalt der verwendeten Rohstoffe und Zwischenprodukte, der Reaktionszeit, Reaktionstemperatur, pH -Wert, etc. wie es dem Fachkundigen im Umgang mit Enzymen bekannt ist.

Bei der Getränkeherstellung aus Getreide, besonders bei der Herstellung von Bieren gibt es meist Prozessschritte, welche den Zusatz der Transglutaminase Im Sinne dieser Erfindung ohne höheren Zeit und Kostenaufwand ermöglichen. In der Regel folgt diesen Schritten ein Hitzeinaktivierungs-, Filtrations- oder Zentrifugationsschritt, womit die vollständige Inaktivierung der Enzymaktivität und die zumindest teilweise Abtrennung der modifizierten Prolamine möglich sind.

Erfindungsgemäß lassen sich Getränke herstellen, die ausgewählt sind aus der Gruppe bestehend aus alkoholhaltigem Bier, alkoholreduziertem Bier, alkoholfreiem Bier, Malzbier, Bier-Mischgetränken, Limonaden, Softdrinks, Fruchtsaftgetränk, Emulsionsgetränken, Fruchtsaftmischgetränken und Mischungen davon.

Im Rahmen des Verfahrens können dem Getränk oder der Vorstufe des Getränkes vor, während oder nach dem Inkontaktbringen mit den quervernetzenden Enzymen für Lebensmittel zugelassene Proteine und Proteinhydrolysate, wie Gelatine, Milch- und Molkenproteine, zugesetzt werden.

Zur Entfernung des modifizierten Prolamins eignen sich gängige Abtrennungsverfahren wie z.B. Filtration, Zentrifugation, Sedimentation oder Siebung. Häufig lassen sich Verfahrensschritte aus der Getränkeherstellung gleichzeitig zur Abtrennung des modifizierten Prolamins nutzen.

Die Enzyme können in aufgereinigter Form oder in Form einer Präparation eingesetzt werden, z.B. einem Extrakt aus einem lebensmittelkompatiblen Organismus.

In einer Ausführungsform kann das Inkontaktbringen mit quervernetzenden Enzymen dadurch erfolgen, dass Mikroorganismen zugesetzt werden, die rekombinant quervernetzende Enzyme produzieren. Als Mikroorganismen eignen sich insbesondere Hefen. Alternativ ist es auch möglich, dass im Getreide bereits rekombinant quervernetzende Enzyme exprimiert werden, die dann im Rahmen des Verfahrens mit dem Prolamin in Kontakt gelangen.

Die Auswahl der Prozessbedingung kann in Anpassung an den Herstellungsprozess durch den Fachmann ermittelt werden. Dem Fachmann ist bekannt, dass die Umsetzungsgeschwindigkeit einer Enzymreaktion im Regelfall mit der Menge an Enzymen und der Temperatur steigt. Niedrige Temperaturen bedingen höhere Mengen oder längere Reaktionszeiten. Bei höheren Temperaturen genügen geringere Mengen bzw. kürzere Einwirkzeiten.

Typischerweise erfolgt das Inkontaktbringen mit dem Getränk oder der Getränkevorstufe und den quervernetzenden Enzymen für einen Zeitraum zwischen 10 min und 24 Stunden. Typischerweise liegt die Temperatur zwischen 5 und 50°C.

In einer Ausführungsform des Verfahrens schließt sich an das Inkontaktbringen ein Inaktivierungsschritt der Enzyme an, insbesondere eine Hitzebehandlung.

Ein weiterer Gegenstand der Erfindung ist ein Getränk, Getränkegrundstoff, Getränkekonzentrat oder Getränkezusatz erhältlich durch das erfindungsgemäße Verfahren sowie ein Lebensmittel, das den Getränkegrundstoff oder das Getränkekonzentrat enthält, beispielsweise in Form eines Joghurts, eines Milchmischgetränkes oder eines diätetischen Getränkes mit Getreideanteile, oder eines Getränkepulvers.

Erfindungsgemäß wird durch das Verfahren der Prolamingehalt des Getränkes gesenkt. Bevorzugt liegt der Prolamingehalt nach der Behandlung unter 500 ppm, mehr bevorzugt unter 100 ppm, noch mehr bevorzugt unter 50 ppm und am meisten bevorzugt unter 20 ppm. Mengen unter 20 ppm sind für Zölialie und Dermatitis herpetiformis Patienten zum Verzehr geeignet und könnten als "glutenfrei" angesehen werden.

Ein weiterer Gegenstand der Erfindung ist die Verwendung von quervernetzenden Enzymen zur Modifizierung von Prolamin in Getränken, Getränkegrundstoffen oder Getränkekonzentraten aus prolaminhaltigem Getreide.

Figur 1 zeigt eine Kalibriergerade zur Bestimmung der Gliadin-Konzentration in einer Probe.

Figur 2a zeigt die Glutenabnahme in Hefeweizen (2 Stunden, 37°C) in Abhängigkeit von der Enzymkonzentration.

Figur 2b zeigt die Glutenabnahme in Hefeweizen (1 U/ml, 37°C) in Abhängigkeit von der Zeit.

Figur 2c zeigt die Glutenabnahme in Hefeweizen (25 U/ml, 2 Stunden) in Abhängigkeit von der Temperatur.

Figur 3 zeigt ein Schema bezüglich möglicher Zusätze von Transglutaminase während der Bierherstellung.

Die Erfindung wird durch die nachfolgenden, nicht-limitierenden Beispiele weiter erläutert.

### Beispiele

### 1) Bestimmung des Gliadingehalts in Produkten

Der analytische Nachweis von Gliadinen in Rohwaren, Zwischenprodukten und Endgetränken erfolgte mit dem RIDASCREEN® Gliadin-Test, einem Sandwich-Enzymimmunoassay zur quantitativen Bestimmung von Gliadinen aus Weizen und verwandten Prolaminen aus Roggen und Gerste in Lebensmitteln. Mit einer Nachweisgrenze von 1.5 ppm stellt dieser Testkit aktuell den *Golden Standard* innerhalb der analytischen Testsysteme dar.

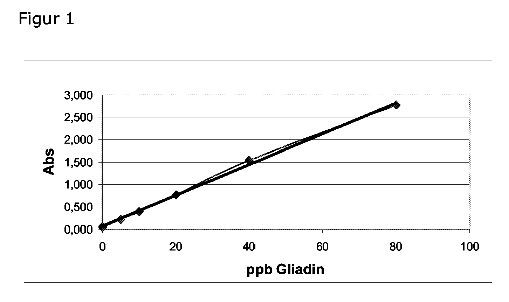

Das Testprinzip beruht auf einer Antigen-Antikörper-Reaktion. Die Vertiefungen von Mikrotiterstreifen sind mit spezifischen Antikörpern gegen Gliadine beschichtet. Durch Zugabe von Standard-Gliadin oder gliadinhaltiger Probe entsteht ein Antikörper-Antigen-Komplex, der im Folgeschritt durch einen zweiten Antikörper, an dem das Enzym Peroxidase gekoppelt ist, erkannt wird. Der Nachweis erfolgt durch Zugabe des Substrats Harnstoffperoxid sowie eines Chromogens (Tetramethylbenzidin). Das an den Antikörper gebundene Enzym wandelt das farblose Chromogen in ein blaues Endprodukt um. Die Zugabe eines Stopp-Reagenzes (H₂SO₄) führt zu einem Farbumschlag von blau nach gelb. Die Messung erfolgt photometrisch bei 450 nm in einem Multititerplatten-Lesegerät. Die der Extinktion der Probe entsprechende Gliadinkonzentration in µg/kg (ppb) wird aus der Kalibrationskurve abgelesen und daraus der tatsächliche Glutengehalt der Probe berechnet; vgl. Figur 1.

### 2) Entfernung von Gliadinen aus Weizenbier durch Zugabe von Transglutaminase

### 2a) Abhängigkeit von der Enzymkonzentration

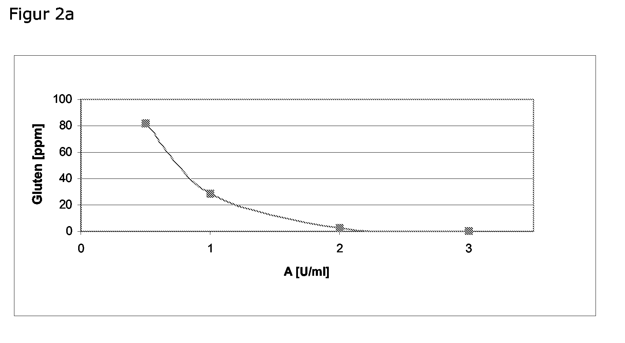

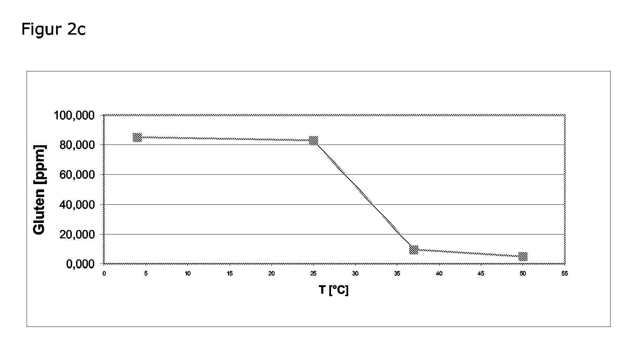

Jeweils 40 µL einer Enzympräparation mit unterschiedlicher Transglutaminase-Aktivität wurden in einem 2 ml Reaktionsgefäß mit 1960 µL Bier bei 37°C für 2 h inkubiert. Nach Ablauf der Inkubationszeit wurde die Enzymaktivität für 10 min bei 100°C inaktiviert. Der Glutengehalt der Lösungen wurde nach dem in Beispiel 1 beschriebenen Verfahren bestimmt. Figur 2a zeigt den Gehalt an nachweisbaren Gliadinen in Abhängigkeit von der Enzymkonzentration.

### 2b) Abhängigkeit von der Inkubationszeit

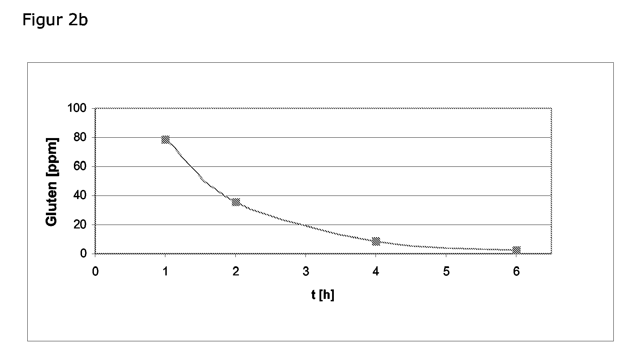

Jeweils 40 µL einer Enzympräparation mit einer Transglutaminase-Aktivität von 1 U /mL wurden in einem 2 ml Reaktionsgefäß mit 1960 µL Bier bei 37 °C inkubiert. Nach Ablauf der Inkubationszeit wurde die Enzymaktivität für 10 min bei 100°C inaktiviert. Der Glutengehalt der Lösungen wurde nach dem in Beispiel 1 beschriebenen Verfahren bestimmt. In Figur 2b wird der Gehalt an nachweisbaren Gliadinen in Abhängigkeit von der Inkubationszeit dargestellt.

### 2c) Abhängigkeit von der Temperatur

Jeweils 40 µL einer Enzympräparation mit einer Transglutaminase-Aktivität von 25 U /mL wurden in einem 2 ml Reaktionsgefäß mit 1960 µL Bier für 2 h bei unterschiedlichen Temperaturen inkubiert. Nach Ablauf der Inkubationszeit wurde die Enzymaktivität für 10 min bei 100°C inaktiviert. Der Glutengehalt der Lösungen wurde nach dem in Beispiel 1 beschriebenen Verfahren bestimmt. In Figur 2c wird der Gehalt an nachweisbaren Gliadinen in Abhängigkeit von der Inkubationstemperatur dargestellt.

### 3) Herstellung eines gliadin-freien Bieres

Versuche wurden nach einem Standardbrauverfahren durchgeführt. 10 kg Malz wurden geschrotet und mit 40 L Brauwasser auf Einmaischtemperatur gebracht. Nach einem typischen Maischverfahren mit 40 L Nachguss wurde bis zu einem Volumen von 75 L Würze geläutert. Die anschließende Kochung der Würze erfolgte für 60 bis 90 Minuten unter Hopfenzugabe und anschließender Whirlpoolrast von 20 bis 30 Minuten. Im Anschluss erfolgte eine Heißtrubabtrennung und mittels Plattenkühler wurde die Würze auf eine Anstelltemperatur von 6°C abgekühlt. Zur Gärung wurden untergärige Hefe für Pilsener Biere verwendet. Die Gärung erfolgte über 6 Tage in Tanks. Anschließend wurde die Hefe aus dem Jungbier abgetrennt und in Corneliusbehältern zur Nachgärung und Lagerung geschlaucht. Nach 20 bis 30 Tagen wurden die Biere filtriert, auf Flaschen abgefüllt und pasteurisiert.

### 3a) Einwirkung von Transglutaminase auf verschiedene Zwischenprodukte während des Brauprozesses

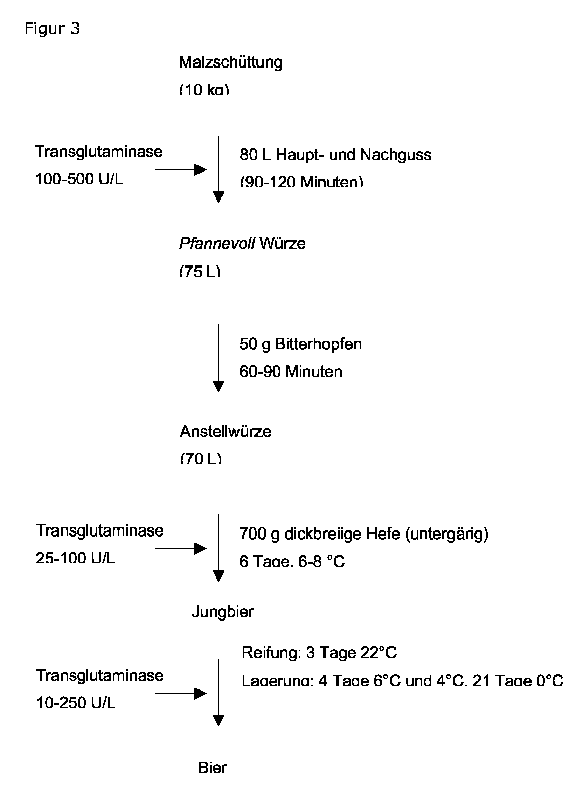

Figur 3 verdeutlicht schematisch den Brauprozess für ein Bier vom Typ Pilsener und zeigt beispielhaft die Anwendung der Transglutaminase innerhalb verschiedener Prozessschritte.

### 3b) Einwirkung von Transglutaminase auf verschiedene kommerzielle Biere

Da für die Herstellung von Weizenbier neben Gerstenmalz auch Weizenmalz verwendet wird, weisen die daraus hergestellten Biere einen sehr hohen Glutengehalt auf, der nicht selten Werte von deutlich > 1000 ppm erreichen kann. Tabelle 1 gibt Beispiele der Anwendung von Transglutaminase zur Gliadinentfernung bei verschiedenen kommerziell erhältlichen Bieren. In den behandelten Bieren konnten nach Behandlung für 24 Stunden bei Raumtemperatur keine Gliadine mehr nachgewiesen werden.

| Bier | Typ | Glutenkonzentration [ppm] |
|---|---|---|
| 1 | Weizenbier, hell | 1500 |
| 2 | Weizenbier, hell | 1725 |
| 3 | Weizenbier, dunkel | 360 |
| 4 | Pils | 170 |
| 5 | Pils | 590 |
| 6 | Pils, alkoholfrei | 40 |

### 4) Herstellung eines gliadin-freien Malzbase für Getränke-Grundstoffe

30 g Malzextrakt mit einer Trockenmasse von 80 Brix werden in 1 L warmen Wasser bei 40 bis 50°C unter starkem Rühren solubilisiert. Im Anschluss werden 100 bis 1000 U Transglutaminase / L Ansatz dazugegeben und für 1 h bei 50°C gerührt. Unlösliche Bestandteile werden anschließend durch Filtration oder Separation entfernt. Die gliadin-freie Malzbase kann mit in der Getränkeindustrie üblichen Rohwaren (z.B. Saft, Emulsionen, Stabilisierungsmittel, Säuren, Kohlenhydrate, Aromen, Essenzen, Farbstoffen, Zuckeraustauschstoffen) und Inhaltsstoffen (Mineralien, Vitamine, funktionelle Ingredients) und unter Einsatz bekannter Prozessierungsschritten wie Homogenisation und Pasteurisation zu einem Grundstoff formuliert werden.

### 5) Herstellung eines gliadin-freien Getränkes

Zur Herstellung eines gliadin-freien Malzgetränkes wird die erfindungsgemäß behandelte Malzbase gemäß Beispiel 4 mit 0,3% Zitronenessenz, 0,4% Zitronensäure und ca. 8% Zucker versetzt, in Flaschen abgefüllt und einem Pasteurisationsschritt unterzogen.

## Patentansprüche

1. Verfahren zur Herstellung eines Getränkes, eines Getränkegrundstoffs, eines Getränkekonzentrates oder eines Getränkezusatzes mit vermindertem Prolamingehalt aus prolaminhaltigen Rohstoffen mit folgenden Schritten:
a) Inkontaktbringen des Getränkes oder einer Vorstufe des Getränks mit quervernetzenden Enzymen, um modifiziertes Prolamin zu erhalten
b) mindestens teilweise Entfernung des modifizierten Prolamins.

2. Verfahren nach Anspruch 1, **dadurch gekennzeichnet, dass** die quervernetzenden Enzyme ausgewählt sind aus den Enzymklassen der Transglutaminasen (EC 2.3.2.13), Peroxidasen (EC 1.11.1.7), Hexose-Oxidasen (EC 1.1.3.5), Tyrosinasen (EC 1.14.18.1), Laccasen (EC 1.10.3.2), Proteindisulfidisomerase (EC 5.3.4.1) und Kombinationen hiervon.

3. Verfahren nach Anspruch 1 oder 2, **dadurch gekennzeichnet, dass** die quervernetzenden Enzyme bakterielle Transglutaminasen sind, insbesondere Ca²⁺-unabhängige Transglutaminasen aus *Streptoverticillium mobaraense.*

4. Verfahren nach einem der Ansprüche 1 bis 3, **dadurch gekennzeichnet, dass** als prolaminhaltiger Rohstoff, Getreide wie Weizen, Roggen, Hafer, Gerste, Dinkel, Grünkorn, Einkorn, Emmer, Tricitale, Bulgur, Kamut, andere prolaminhaltige Rohstoffe oder Mischungen davon eingesetzt werden.

5. Verfahren nach einem der Ansprüche 1 bis 4, **dadurch gekennzeichnet, dass** das Getränk ausgewählt ist aus der Gruppe bestehend aus alkoholhaltigem Bier, alkoholreduziertem Bier, alkoholfreiem Bier, Malzbier, Bier-Mischgetränken, Limonaden, Softdrinks, Fruchtsaftgetränk, Emulsionsgetränken, Fruchtsaftmischgetränken, Trinkjoghurts, diätetische Getränken mit Getreideanteil und Mischungen davon.

6. Verfahren nach einem der Ansprüche 1 bis 5, **dadurch gekennzeichnet, dass** dem Getränk oder der Vorstufe des Getränkes vor, während oder nach dem Inkontaktbringen mit den quervernetzenden Enzymen für Lebensmittel zugelassene Proteine und Proteinhydrolysate, wie Gelatine, Milch- und Molkenproteine zugesetzt werden.

7. Verfahren nach einem der Ansprüche 1 bis 6, **dadurch gekennzeichnet, dass** zur mindestens teilweise Entfernung des modifizierten Prolamins eine gängige Abtrennungsmethode, wie Filtration, Zentrifugation, Sedimentation oder Siebung durchgeführt wird.

8. Verfahren nach einem der Ansprüche 1 bis 7, **dadurch gekennzeichnet, dass** das Inkontaktbringen mit quervernetzenden Enzymen durch Zugabe von Mikroorganismen und/oder Getreide erfolgt, wobei die Mikroorgansimen oder das Getreide rekombinant quervernetzende Enzyme produzieren.

9. Verfahren nach einem der Ansprüche 1 bis 8, **dadurch gekennzeichnet, dass** der Mikroorganismus eine Hefe ist.

10. Verfahren nach einem der Ansprüche 1 bis 9, **dadurch gekennzeichnet, dass** nach dem Inkontaktbringen eine Inaktivierung der quervernetzenden Enzyme erfolgt, insbesondere durch eine Hitzebehandlung.

11. Getränk, Getränkegrundstoff, Getränkekonzentrat oder Getränkezusatz erhältlich durch ein Verfahren nach einem der Ansprüche 1 bis 9.

12. Lebensmittel enthaltend den Getränkegrundstoff, das Getränkekonzentrat oder den Getränkezusatz gemäß Anspruch 11.

13. Getränk nach Anspruch 11 oder Lebensmittel nach Anspruch 12, **dadurch gekennzeichnet, dass** der Prolamingehalt <= 20 ppm beträgt.

14. Verwendung von quervernetzenden Enzymen zur Modifizierung von Prolaminen in Getränken, Getränkegrundstoffen, Getränkekonzentraten oder Getränkezusätze aus prolaminhaltigem Getreide.
